# EUROPEAN PATENT SPECIFICATION

(11) **EP 2 472 846 B1**
(45) Date of publication and mention of the grant of the patent: **02.03.2016**
(21) Application number: 11010257.1
(22) Date of filing: 28.12.2011
(51) Int. Cl.: H04N 1/32, H04N 1/00

(54) **Image forming apparatus**
Bilderzeugungsvorrichtung
Appareil de formation d'images

(30) Priority: 28.12.2010 JP 2010291616; 28.12.2010 JP 2010291617; 28.12.2010 JP 2010291618
(43) Date of publication of application: 04.07.2012
(73) Proprietor: Kyocera Document Solutions Inc., Chuo-ku Osaka-shi (JP)
(72) Inventor: Maeda, Tetsuya, Osaka-shi, Osaka 540-8585 (JP); Morita, Keiko, Osaka-shi, Osaka 540-8585 (JP)
(74) Representative: Müller-Boré & Partner Patentanwälte PartG mbB

(56) References cited:
- EP-A1- 1 768 373
- EP-A1- 2 230 829
- JP-A- 2003 084 941
- JP-A- 2004 021 390
- US-A- 5 669 040
- US-A1- 2006 055 968
- US-A1- 2006 181 750
- US-A1- 2007 250 535
- US-A1- 2008 196 028
- US-A1- 2009 009 801
- US-A1- 2009 040 546

## Description

### BACKGROUND

The present disclosure relates to an image forming apparatus that has a function to accumulate and save print data.

In recent years, digital complex machines that have document boxes for accumulating and saving image data obtained through a scanner or document data transmitted from personal computers or other external devices have been widely spread. These types of image forming apparatuses are capable of not only printing the data saved in the document boxes but also transmitting the data to fax machines or personal computers.

Two examples of such apparatuses are found in European patent application EP 2 230 829 A1 and Japanese patent publication 2003-84941A. An embodiment of the former is an image processing apparatus comprising an input control unit, a condition setting unit, an image output unit, a determining unit, a display control unit, a correction-possibility determining unit, a correcting unit, and a hard disk drive. The apparatus is connected to an operation display unit. The hard disk drive stores a plurality of document data, an output condition, a reoutput condition, attributes of the document data, and a restrictive condition rule. The latter discloses an image processing device in which plural jobs are selected from a box range in an image memory by an operation part. A control part clears processing modes for the plural jobs selected, and newly sets a processing mode for totally processing the plural jobs selected. The plural jobs selected and the processing mode newly set are stored as a new job in the box range in the image memory.

European patent application EP 1 768 373 discloses an image forming apparatus allowing a user to store image files in selected ones of a plurality of folders. Each file is stored together with post-processing conditions in the case of outputting the image data. A plurality of files can be selected to be processed together, and the user can select whether the individual post-processing conditions of each file or common post-processing conditions for all files of the combination shall be used. In the latter case, post-processing conditions of each selected file are invalidated and an output setting image area is displayed to set new post-processing conditions.

However, the document data that are transmitted from the personal computers and saved in the document boxes are accompanied by print setting information on print settings such as double-side printing or staple printing. The image data obtained through the scanner, on the other hand, are saved in the document boxes without the print setting information. Therefore, when simultaneously printing the document data transmitted from the personal computers and the image data obtained through the scanner, a user cannot find out which data's print setting information are used for printing the data. Even when the user performs a print setting prior to the printing of the data, the user cannot find out what kind of printed matter is obtained, because a complicated prohibited relationship occurs between the print setting done by the user and the data that already carry the print setting information.

Moreover, when printing at once a plurality of selected document data saved in the document boxes, these document data can be printed with no problems as long as the print setting information thereof are used directly. However, when printing based on common print setting and when the print setting information have different contents, all of the print setting information have to be reset, which is troublesome.

Furthermore, when printing such document data, changes can be made to the print setting information that are originally retained in the document data. However, an operation screen that shows setting items, which the user wishes to know, needs to be displayed by means of a key operation in order to allow the user to understand the contents of the print setting information that are originally retained in the document data. This is inconvenient when the user wishes to immediately understand the contents of the print setting information.

An object of the present disclosure is to provide an image forming apparatus that has an improved operability in a print setting for selecting and printing accumulated print data retaining print setting information.

### SUMMARY

An image forming apparatus according to one aspect of the present disclosure to achieve the object described above includes an image reader, a storage unit, a storage control unit, a print accepting unit, an image forming unit, a determination unit, a display control unit, an agreement accepting unit, a print setting accepting unit and a print control unit. The image reader reads an original document to generate image data. The storage unit accumulates and stores print data. The storage control unit, when print data having a print setting set by an information processor are transmitted to the image forming apparatus, causes the storage unit to store the print setting information about the print setting and the print data transmitted from the information processor, and when the image data is generated by the image reader, causes the storage unit to store the generated image data as the print data not retaining any print setting information. The print accepting unit accepts a selected input of the print data stored in the storage unit. The image formation unit prints out an image onto a sheet. The determination unit determines, when the print accepting unit accepts a selected input of a plurality of print data, whether or not the plurality of print data include both print data retaining print setting information and print data not retaining any print setting information. The display control unit causes a display unit to display a message about invalidation of the print setting information retained in the print data, when the determination unit determines that the print data accepted by the print accepting unit include both the print data retaining the print setting information and the print data not retaining any print setting information. The agreement accepting unit accepts a selected input about whether to agree to the message about invalidation of the print setting information. The print setting accepting unit accepts a setting input of same print setting for the plurality of print data when the agreement accepting unit accepts the selected input about agreement. The print control unit invalidates the print setting information retained in the print data accepted by the print accepting unit and causes the image formation unit to execute printing based on the print data, after the message is displayed by the display control unit. The display unit further causes the display unit not to display the message when the determination unit determines that the print data accepted by the print accepting unit does not include both the print data retaining the print setting information and the print data not retaining any print setting information. The print control unit further stops the printing when the agreement accepting unit accepts a select input about disagreement.

### RELATED EXAMPLES

An image forming apparatus according to a first example related to the present disclosure but not covered by the scope of the claims includes a storage unit, a print accepting unit, an image forming unit, a change selection accepting unit, a display control unit, a print setting accepting unit and a print control unit. The storage unit accumulates and stores print data. The print accepting unit accepts a selected input of the print data stored in the storage unit. The image forming unit prints out an image onto a sheet. The change selection accepting unit, when the print accepting unit accepts a selected input of a plurality of print data retaining print setting information, accepts a selected input about whether to print each of the print data by directly using the print setting information retained in each of the print data or to change all of the print setting information retained in each of the print data. The display control unit causes a display unit to display a print setting screen, when the change selection accepting unit accepts the selected input to change all of the print setting information retained in each of the print data. The print setting accepting unit accepts a setting input of a print setting via the print setting screen. The print control unit causes the image forming unit to print each of the print data by using the print setting information when the change selection accepting unit accepts the selected input to print each of the print data by directly using the print setting information retained in each of the print data, and invalidates all of the print setting information retained in each of the print data and causes the image formation unit to print each of the print data by using a print setting accepted by the print setting accepting unit when the change selection accepting unit accepts the selected input to change all of the print setting information retained in each of the print data.

An image forming apparatus according to a second example related to the present disclosure but not covered by the scope of the claims includes a storage unit, a print accepting unit, an image forming unit, a setting change accepting unit, an initial value storage unit, a determination unit, a display control unit, a print setting accepting unit and a print control unit. The storage unit accumulates and stores print data. The print accepting unit accepts a selected input of the print data stored in the storage unit. The image forming unit prints out an image onto a sheet. The setting change accepting unit, when the print accepting unit accepts a selected input of one print datum retaining print setting information, accepts a selected input about whether to print the print datum by directly using the print setting information or to print the print datum by changing the print setting information. The initial value storage unit stores an initial value of print setting information of an apparatus main body. The determination unit, when the setting change accepting unit accepts the selected input to print the print datum by changing the print setting information retained in the print datum, determines whether the print setting information is different from the print setting information stored in the initial value storage unit. The display control unit, when the setting change accepting unit accepts the selected input to print the print datum by changing the print setting information retained in the print datum, causes a display unit to display a print setting screen, and when the determination unit determines that the print setting information retained in the print datum is different from the print setting information stored in the initial value storage unit, causes a setting content of the print setting information retained in the print datum to be displayed on the print setting screen about a print setting information item being different between the print datum and the initial value storage unit. The print setting accepting unit accepts a setting input of a print setting via the print setting screen. The print control unit, when the setting change accepting unit accepts the selected input to print the print datum by directly using the print setting information retained in the print datum, causes the image formation unit to print the print datum by using the print setting information, and when the setting change accepting unit accepts the selected input to print the print datum by changing the print setting information retained in the print datum, causes the image formation unit to print the print datum by using the print setting accepted by the print setting accepting unit.

### BRIEF DESCRIPTION OF THE DRAWINGS

FIG. 1 is a diagram schematically showing an internal structure of an image forming apparatus according to the embodiment and first and second examples related to the present disclosure;
FIG. 2 is a block diagram showing an electrical configuration of the image forming apparatus according to the embodiment;
FIG. 3 is a diagram for illustrating a data configuration within a box;
FIG. 4 is a diagram showing an example of an operation display unit;
FIG. 5 is a first half of a flowchart showing a flow of a printing process for printing data stored in the box according to the embodiment;
FIG. 6 is a second half of the flowchart showing the flow of the printing process for printing data stored in the box according to the embodiment;
FIG. 7 is a diagram showing a list screen showing a list of names of boxes;
FIG. 8 is a diagram showing a list screen showing the data saved in the box;
FIG. 9 is a diagram showing a screen that is obtained when a warning message window is displayed;
FIG. 10 is a diagram showing a print setting screen;
FIG. 11 is a block diagram showing an electrical configuration of the image forming apparatus according to the first related example;
FIG. 12 is a flowchart showing a flow of a printing process for printing data stored in a box according to the first related example;
FIG. 13 is a diagram showing a screen for accepting a selected input about whether print setting information retained in print data are used or not;
FIG. 14 is a block diagram showing an electrical configuration of the image forming apparatus according to the second related example;
FIG. 15 is a diagram for illustrating a data configuration of an initial setting storage unit;
FIG. 16 is a flowchart showing a flow of a printing process for printing a datum stored in a box according to the second related example;
FIG. 17 is a diagram showing a print setting screen according to the second related example; and
FIG. 18 is a diagram showing a conventional print setting screen.

### DETAILED DESCRIPTION

### (Embodiment)

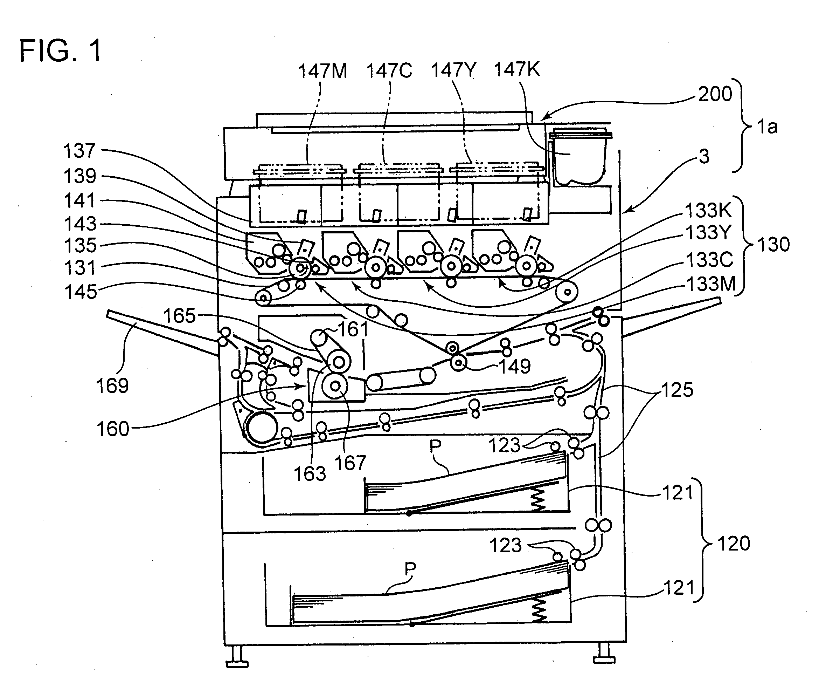

An embodiment and two related examples of the present disclosure are described hereinafter in detail with reference to the drawings. The embodiment provides an image forming apparatus that can easily print data of document boxes simultaneously, whether or not print setting information are retained. According to this image forming apparatus, it is possible to improve an operability in a print setting for selecting and printing the print data accumulated in the document boxes and retaining the print setting information. FIG. 1 is a diagram schematically showing an internal structure of an image forming apparatus 1a according to the embodiment of the present disclosure. The image forming apparatus 1a can be applied to, for example, a digital complex machine with copying, printing and fax functions. The image forming apparatus 1a is of a tandem type and has an apparatus main body 3 and an image reader 200 disposed over the apparatus main body 3.

The image reader 200 reads an image (characters, diagrams, photographs, etc.) using a CCD (Charge Coupled Device) or the like and outputs the read image as image data. The image reader 200 has a function to read a color image. This enables copying and faxing of the color image.

The apparatus main body 3 has a sheet storing unit 120, an image forming unit 130, and a fixing unit 160.

The sheet storing unit 120 is disposed in a lowest part of the apparatus main body 3 and has a sheet tray 121 capable of storing a stack of sheets P. The sheet tray 121 is inserted into the apparatus main body 3. The sheet tray 121 is pulled out of the apparatus main body 3 to replenish the sheet tray 121 with the sheets P. The top sheet P out of the stack of sheets P stored in the sheet tray 121 is fed out toward a sheet conveying path 125 as a result of driving a pickup roller 123. The sheet P is conveyed to the image forming unit 130 via the sheet conveying path 125.

The image forming unit 130 forms toner images on the conveyed sheet P. The image forming unit 130 has a magenta unit 133M, a cyan unit 133C, a yellow unit 133Y, and a black unit 133K, which are disposed in order of transferring the toner images to a transfer belt 131. These units have the same configuration; therefore, the magenta unit 133M is taken herein as an example.

The magenta unit 133M has a photosensitive drum 135 and an exposure device 137. A charger 139, a developing device 141 and a cleaner 143 are disposed around the photosensitive drum 135. The charger 139 evenly charges a circumferential surface of the photosensitive drum 135. The exposure device 137 generates light that corresponds to magenta data contained in the image data (the image data output from the image reader 200, image data transmitted from a personal computer, image data received by a fax machine, etc.), and irradiates the uniformly charged circumferential surface of the photosensitive drum 135. As a result, an electrostatic image with a magenta pattern is formed on the circumferential surface of the photosensitive drum 135. In this state, magenta toner is supplied from the developing device 141 to the circumferential surface of the photosensitive drum 135, forming a magenta-patterned toner image on the circumferential surface.

The transfer belt 131 can move clockwise while being sandwiched between the photosensitive drum 135 and a primary transfer roller 145. The magenta-patterned toner image is transferred from the photosensitive drum 135 to the transfer belt 131. Magenta toner remaining on the circumferential surface of the photosensitive drum 135 is removed by the cleaner 143. The above is the description of the magenta unit 133M.

A magenta toner container 147M, a cyan toner container 147C, a yellow toner container 147Y, and a black toner container 147K, which are containers that contain toners of corresponding colors, are disposed above the magenta unit 133M, the cyan unit 133C, the yellow unit 133Y, the black unit 133K, respectively. The developing devices 141 of the respective colors are replenished with the toners from the containers.

As described above, the magenta-patterned toner image is transferred to the transfer belt 131. A cyan-patterned toner image is transferred onto the magenta-patterned toner image, and similarly a yellow-patterned toner image and a black-patterned toner image are transferred thereon. As a result, a color toner image is formed on the transfer belt 131. Transferring the layers of the toner images of these colors onto the transfer belt 131 can form a color toner image on the transfer belt 131. A secondary transfer roller 149 transfers this color toner image to the sheet P that is conveyed from the sheet storing unit 120 described above.

The sheet P with the color toner image thereon is sent to the fixing unit 160. The fixing unit 160 has a structure in which a fixing belt 165 is wrapped around a heating roller 161 and a fixing roller 163. The fixing belt 165 is sandwiched between the fixing roller 163 and a pressure roller 167. The sheet P with the color toner image thereon is sandwiched by these rollers. Therefore, heat and pressure are applied to the color toner image and the sheet P, fixing the color toner image to the sheet P. The sheet P is discharged to a catch tray 169.

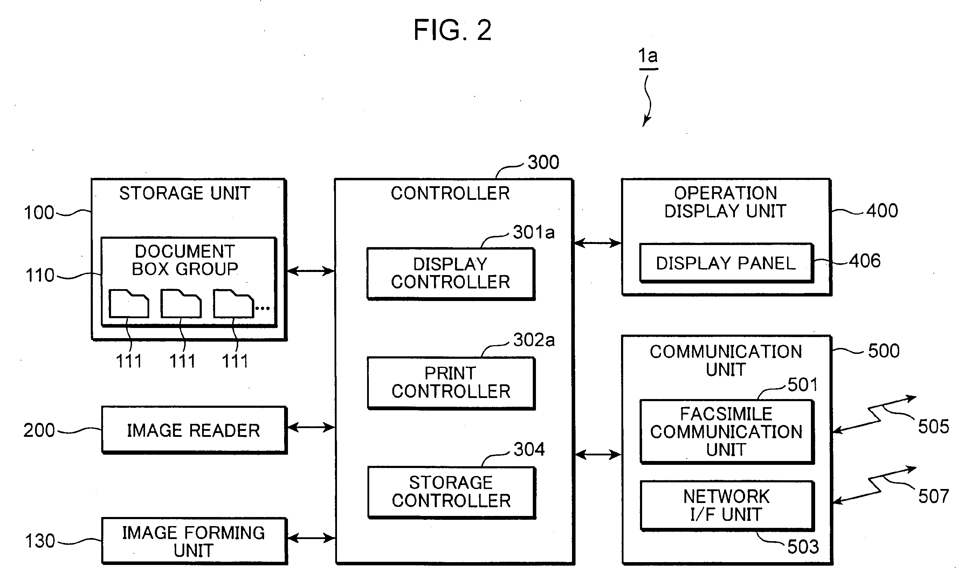

FIG. 2 is a block diagram showing an electrical configuration of the image forming apparatus 1a shown in FIG. 1. The image forming apparatus 1a has a configuration in which a storage unit 100, the image reader 200, the image forming unit 130, a controller 300, an operation display unit 400, and a communication unit 500 are mutually connected by buses. Since FIG. 1 illustrates the image forming unit 130 and the image reader 200, the descriptions thereof are omitted.

The storage unit 100 is a nonvolatile storage device. The storage unit 100, configured by a storage medium such as a hard disk or flash memory, has a document box group 110 in which are stored boxes 111 for accumulating and saving print data that are obtained as the image data read by the image reader 200 or document data received from the personal computer or the like by the communication unit 500. The data saved in the boxes 111 can be printed any time and handled in a variety of functions, including a batch printing function for printing a plurality of data at once, a print job management function, and a preview function. The boxes 111 can be used by users, groups, departments, and the like.

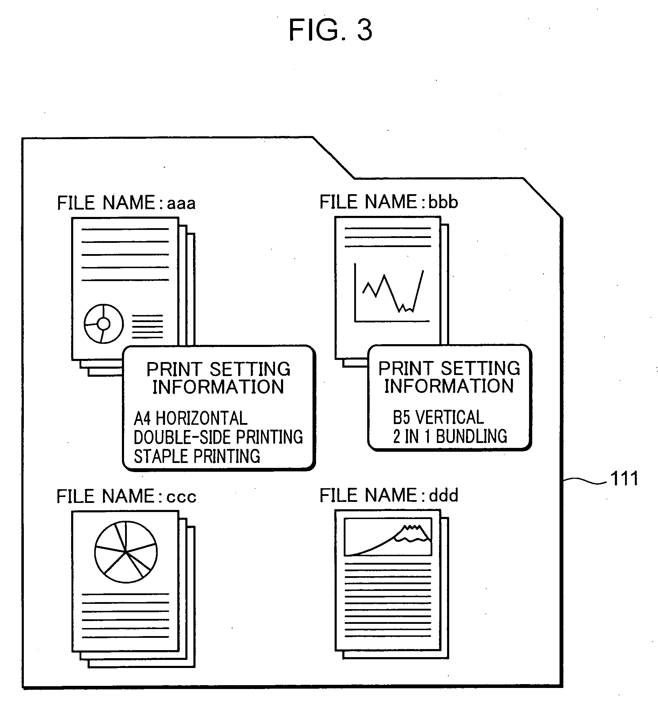

FIG. 3 is a diagram for illustrating a data configuration of one of the boxes 111. The print data saved in the box 111 include data retaining print setting information and data not retaining the print setting information. Generally, the document data are transmitted from the personal computer or other information processor, along with the print setting information such as information items on a sheet size, double-side printing, staple designation and the like that are set on the personal computer by the user. Therefore, the document data, accompanied by the print setting information, are saved in the box 111. On the other hand, the image data read by the image reader 200 are saved without the print setting information. In case of FIG. 3, a file aaa and a file bbb retain the print setting information, but a file ccc and a file ddd do not retain any print setting information.

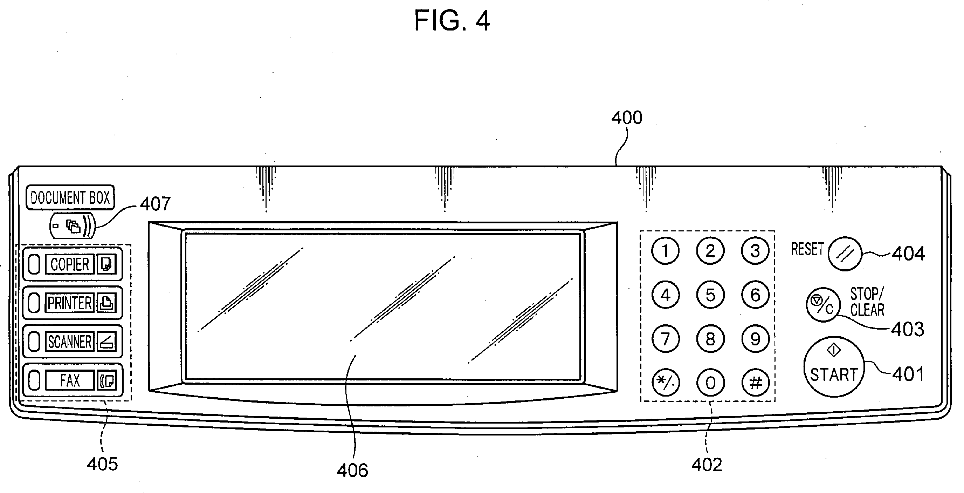

FIG. 4 is a diagram showing an example of the operation display unit 400. The operation display unit 400 is provided with operation keys configured by hard keys. Specifically, the operation display unit 400 is provided with a start key 401, a numerical keypad 402, a stop key 403, a reset key 404, and a function switch keypad 405 for switching between copying, printing, scanning and fax functions. A document box key 407 is a key used when performing an operation related to the document boxes, as described hereinafter.

The operation display unit 400 is also provided with a display panel 406 with a touch panel function. The display panel 406 is configured by an LDC (Liquid Crystal Display), an ELD (Electronic Luminescent Display) and the like, on which are displayed various operations, contents of operations, and operation keys configured by soft keys. Once the user performs a touch operation on the display panel 406, the display panel 406 detects a touched position and outputs a resultant detection signal to the controller 300.

The communication unit 500 has a facsimile communication unit 501 and a network I/F unit 503. The facsimile communication unit 501 has an NCU (Network Control Unit) for controlling the connection between a destination fax machine and a telephone line and a modulation/demodulation circuit for modulating/demodulating a facsimile communication signal. The facsimile communication unit 501 is connected to a telephone line 505. The network I/F unit 503 is a communication interface circuit for executing communication between a LAN (Local Area Network) 507 and the personal computer or other terminal device, and is connected to the LAN 507.

The controller 300 is configured by a CPU (Central Processing Unit), a ROM (Read Only Memory), a RAM (Random Access Memory), an image memory, and the like. The CPU executes control, which is required in operating the image forming apparatus 1a, on the abovementioned hardware configuring the image forming apparatus 1a. The ROM stores software required in controlling operation of the image forming apparatus 1a. The RAM is used for temporarily storing data generated at the time of the execution of the software and for storing application software. The image memory temporarily stores the image data (the image data output from the image reader 200, the document data received by the communication unit 500, etc.).

The controller 300 also has a display controller 301a, a print controller 302a, and a storage controller 304. The display controller 301a controls the display panel 406 to display messages about the various operations and the contents of operations, as well as the operation keys.

The print controller 302a performs print control on the image forming unit 130 to print the print data saved in the box 111. More specifically, when printing at once a plurality of print data out of the print data stored in the box 111, and when the plurality of print data include both the print data retaining the print setting information and the print data not retaining the print setting information, it is difficult for the user to understand whether the print data are printed using the print setting information or not. Furthermore, when simultaneously printing a plurality of print data that retain print setting information different from one another, it is difficult for the user to understand which data's print setting information are used for printing the print data. In addition, even when the user performs print setting prior to the execution of printing, a complicated prohibition relationship is generated between the print setting of the user and the data carrying the print setting information. This makes it difficult for the user to understand what kind of printed matter is obtained.

Therefore, when printing at once the print data retaining the print setting information and the print data not retaining the print setting information, the print controller 302a invalidates the print setting information retained in the print data (defaults the print setting information) and issues a print instruction to the image forming unit 130. This allows the user to easily understand how the selected data are output.

When the print data are transmitted to the image forming apparatus 1a after the print setting is performed thereon through the personal computer or other information processor, the storage controller 304 causes the storage unit 100 to store the print data transmitted from the information processor, along with the print setting information about the print setting. The storage controller 304 also causes the storage unit 100 to store the image data obtained by reading an original document by means of the image reader 200, and the print data not retaining the print setting information.

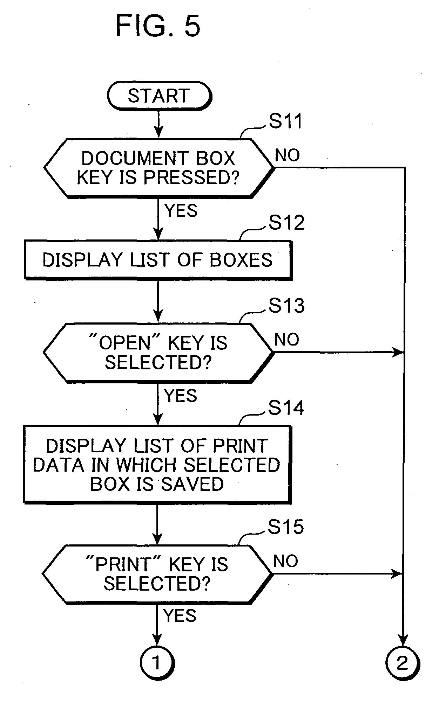

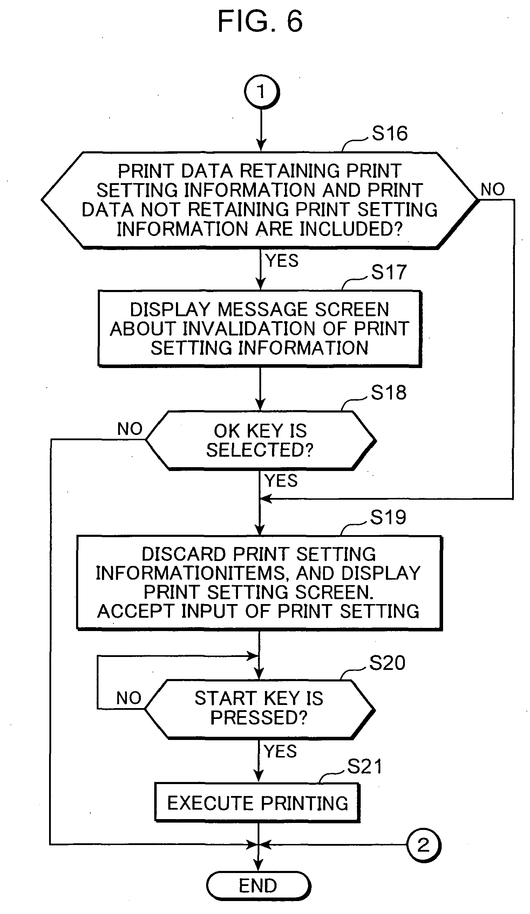

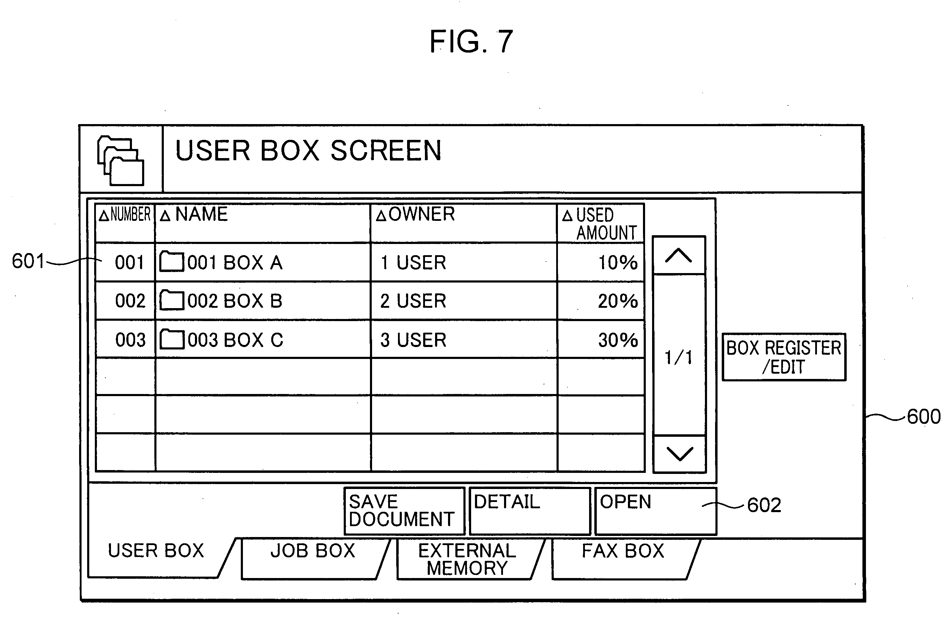

Next is described in detail a method for printing the print data saved in the box 111. FIGS. 5 and 6 are flowcharts showing flows of printing processes for printing the print data saved in the box 111 according to the embodiment. When the user presses the document box key 407 of the operation display unit 400 (step S11; YES), the display controller 301a displays a screen 600 on the display panel 406 (step S12). FIG. 7 shows the list screen 600 of boxes stored in the document box group 110. The user uses the touch panel function to select a desired box from the boxes displayed on the screen 600.

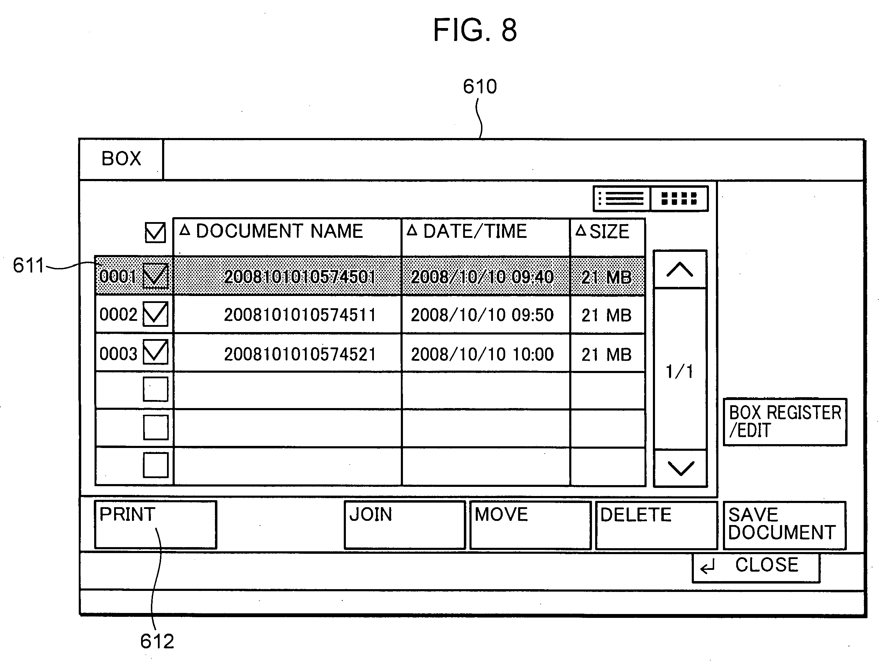

Then, when an "open" key 602 is selected by the user (step S13; YES), the display controller 301a displays a screen 610 shown in FIG. 8 (step S14). In other words, the display controller 301a causes the display panel 406 to display a screen that allows the controller 300 (print accepting unit) to accept a selected input of the print data stored in the storage unit 100. FIG. 8 shows the list screen 610 of the print data that are saved in the box selected on the screen 600 shown in FIG. 7. The user can select data to be printed, from the print data displayed on the screen 610. The user can select one print datum or a plurality of print data. In response to a touch operation by the user, the display controller 301a displays check marks on check boxes 611 corresponding to the selected print data.

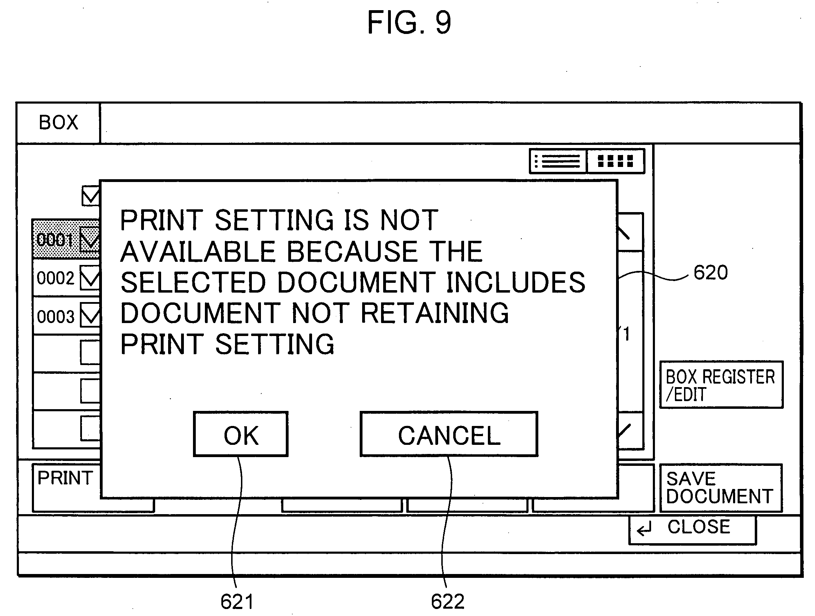

When the print data are selected and the user selects a "print" key 612 (step S15; YES), the print controller 302a reads the selected print data from the box 111 and temporarily stores the selected print data in the RAM or the like of the controller 300. The controller 300 (determination unit) then determines whether or not the print data stored in the RAM include both the print data retaining the print setting information and the print data not retaining the print setting information (step S16). When only either the print data retaining the print setting information or the print data not retaining the print setting information are included (step S16; NO), the controller 300 shifts to step S19. When both of the print data retaining/not retaining the print setting information are included (step S16; YES), the display controller 301a causes the display panel 406 to display a warning message explaining that the print setting information of the print data are invalidated (step S17). FIG. 9 shows a screen that is obtained when a warning message window 620 is displayed. The controller 300 (agreement accepting unit) accepts a selected input on whether the user agrees to the warning message or not.

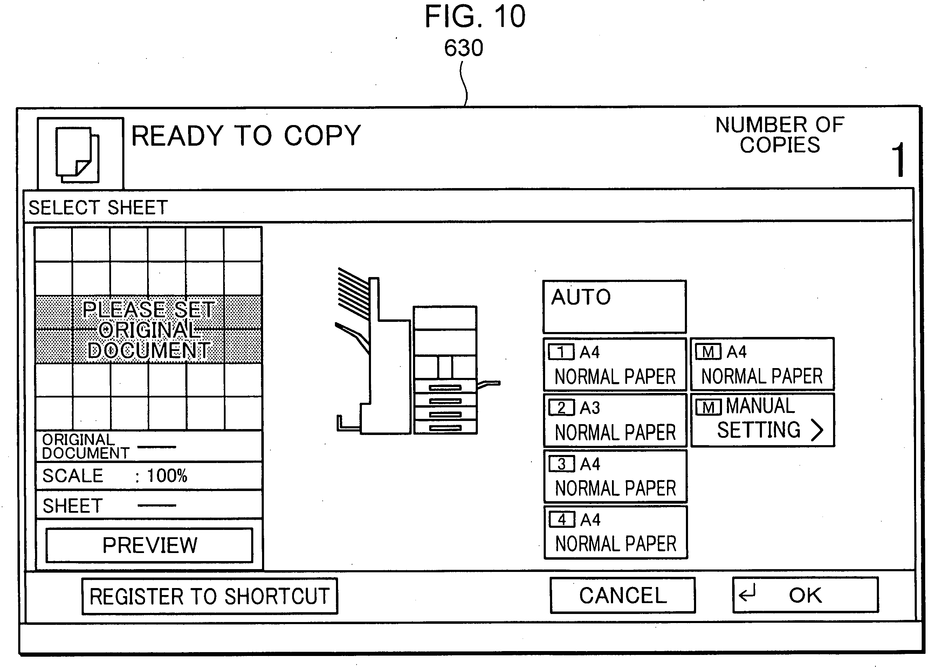

Subsequently, when the user selects an OK key 621 (step S18; YES), the print controller 302a discards the print setting information of the print data stored temporarily in the RAM. At this moment, therefore, each of the print setting information is in a default state (initial state). In other words, when invalidating the print setting information that are retained in the print data accepted by the controller 300 (print accepting unit), the print controller 302a assigns initial values of the print settings set in the apparatus main body 3 of the image forming apparatus 1a, the print settings being done with respect to both of the print data retaining/not retaining the print setting information, which are accepted by the controller 300 (print accepting unit). Then, the display controller 301a displays a print setting screen 630 shown in FIG. 10 on the display panel 406. The user uses this print setting screen 630 to select a sheet and perform a desired print setting, i.e., double-side printing or staple copying. In other words, the controller 300 (print setting accepting unit) accepts a print setting input.

Allowing the user to perform the print setting with the print data retaining the print setting information, generates a complicated prohibition relationship between the print setting done by the user and the print setting information retained in the print data. This makes it difficult for the user to understand what kind of printed matter is obtained. The user can easily get the picture of a printed matter to be output, by invalidating the print setting information retained in the print data and printing the print data by using the contents of a new print setting.

Once the user performs the touch operation on the display panel 406, the display panel 406 with the touch panel function detects a touched position and outputs a resultant detection signal to the controller 300. In this case, based on this detection signal, the print controller 302a sets or changes the print setting information of the print data stored temporarily in the RAM (step S19).

Here, "setting the print setting information" means that the print controller 302a adds the print setting information, set in step S19, to the print data not retaining the print setting information, the print data being included in the print data stored temporarily in the RAM. Moreover, "changing the print setting information" means that the print controller 302a changes the print setting information of the print data to the print setting information in step S19, the print data being included in the print data stored temporarily in the RAM. As a result, the plurality of selected print data (i.e., the print data stored temporarily in the RAM) eventually retain the same print setting information.

When the user presses the star key 401 (step S20; YES), the print controller 302a outputs the print data stored temporarily in the RAM, to the image forming unit 130, and causes the image forming unit 130 to execute printing of the print data. Consequently, the image forming unit 130 prints the print data by using the print setting information retained in the print data (step S21). Note that when the OK key 621 is not selected in step S18 (step S18; NO), it means that the user does not wish to invalidate the print setting information retained in the selected print data. Therefore, the controller 300 ends the printing process. Thus, when the user wishes to perform printing based on the print setting information of the print data without invalidating these print setting information, the user can easily stop the printing by choosing to disagree via the agreement accepting unit.

When it is determined in step S16 that only either the print data retaining the print setting information or the print data not retaining the print setting information are included (step S16; NO), the controller 300 shifts to step S19 and discards the print setting. However, when only the print data retaining the print setting information are included, each of the print data may be printed using the corresponding print setting information.

As described above, when printing at once the print data retaining the print setting information and the print data not retaining the print setting information, the print controller 302a invalidates the print setting information retained in the print data, and thereafter causes the image forming unit 130 to print the print data. Alternatively, after invalidating the print setting information retained in the print data, the print data can be printed using the print setting done by the user. As a result, the user can easily understand how the selected data are output when printing at once the print data retaining the print setting information and the print data not retaining the print setting information. Furthermore, as shown in FIG. 9, the user can easily know that printing is executed based on the default print setting, via the display panel 406 displaying a message about the invalidation of the print setting information.

The image forming apparatus 1a according to the embodiment has the following aspects. When invalidating the print setting information retained in the print data accepted by the controller 300 (print accepting unit), the print controller 302a assigns the initial value of the print settings set in the apparatus main body 3 of the image forming apparatus 1a, the print settings being done with respect to both the print data retaining/not retaining the print setting information, which are accepted by the print accepting unit.

According to this aspect, when it is found out that the print data retaining the print setting information and the print data not retaining the print setting information are included in the plurality of print data as a result of accepting the selected input of the plurality of print data, the print settings can be collectively set to the initial values of the print settings set in the apparatus main body.

### (First Related Example)

A first example related to the present disclosure but not covered by the scope of the claims is described with reference to the drawings. The first related example provides an image forming apparatus in which the contents of the print setting information can be changed easily when printing at once the plurality of print data retaining print setting information different from one another, and which thereby provides understandable print results. According to this image forming apparatus, it is possible to improve an operability in a print setting for selecting and printing the print data accumulated in the document boxes and retaining the print setting information.

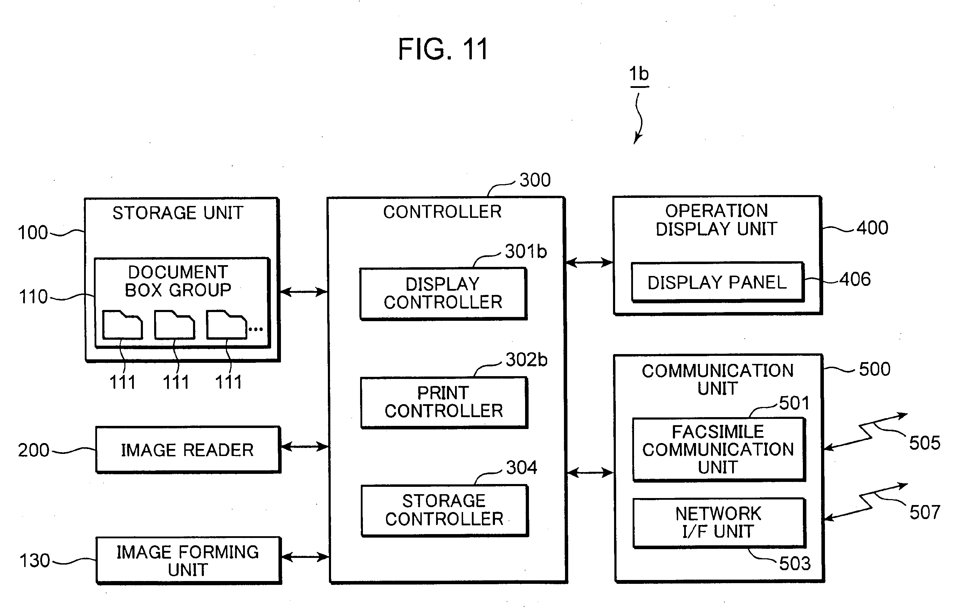

An internal structure of an image forming apparatus 1b according to the first related example is the same as the internal structure of the image forming apparatus 1a according to the embodiment shown in FIG. 1; therefore, the description of the internal structure of the image forming apparatus 1b is omitted. FIG. 11 is block diagram showing an electrical configuration of the image forming apparatus 1b according to the first related example. The same reference numerals as those of the image forming apparatus 1a of the embodiment shown in FIG. 2 are applied to the components of the image forming apparatus 1b; therefore, the description of the component.

The controller 300 has a display controller 301b, a print controller 302b, and the storage controller 304. The display controller 301b controls the display panel 406 to display messages about various operations and contents of operations, as well as the operation keys. The display controller 301b also causes the display panel 406 to display a screen that allows the controller 300 (print accepting unit) to accept a selected input of the print data stored in the storage unit 100.

The print controller 302b performs print control on the image forming unit 130 to print the print data saved in the box 111. More specifically, as shown in the file aaa of FIG. 3, the document data transmitted from the personal computer are accompanied by the print setting information, such as information on double-side printing or staple printing, and saved as the print data in the box 111. When the user wishes to print at once a plurality of print data retaining the print setting information, out of the print data saved in the box 111, or when the user wishes to print the file aaa and the file bbb of FIG. 3 at once, no problem arises as long as the print setting information retained in each of the files is directly used to print the print data. However, when the user wishes to print the print data in accordance with a common print setting, the contents of the print setting information retained in the files need to be changed, and such an operation can be complicated.

When printing, in accordance with the common print setting, the plurality of print data that retain print setting information different from one another, the print controller 302b invalidates all of the print setting information, and causes the image forming unit 130 to execute the printing using new print setting. In other words, when the controller 300 (change selection accepting unit) accepts a selected input for changing all of the print setting information retained in the print data, the print controller 302b causes the image forming unit 130 to print the print data in accordance with the print setting that is accepted by the controller 300 (print setting accepting unit) as the common print setting.

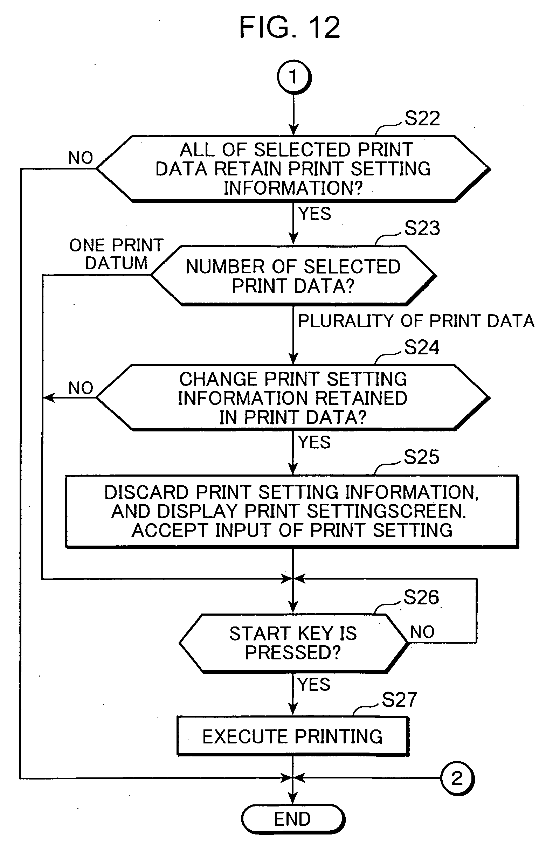

Next is described in detail a method for printing the plurality of print data that retain the print setting information different from one another. FIG. 12 is a flowchart showing a flow of a printing process for printing the print data stored in the box 111 according to the first related example. FIG. 12 shows a second half of the flowchart. A first half of the flowchart is same as the flowchart shown in FIG. 5; therefore, the description thereof is omitted.

When the print data are selected and the user selects the "print" key 612 (step S15 of FIG. 5; YES), the print controller 302b reads the selected print data from the box 111 and temporarily stores the selected print data in the RAM or the like of the controller 300. When none of the selected print data retain the print setting information (step S22; NO), the controller 300 ends the printing process in order to perform a different process. An example of the different process is now described briefly. When the selected print data do not carry the print setting information, the display controller 301b displays the print setting screen, and the print controller 302b executes printing using the set printing setting. When there exist both the print data retaining the print setting information and the print data not retaining the print setting information, the print controller 302b invalidates the print setting information and executes printing using new print setting information.

Then, when all of the selected print data retain the print setting information (step S22; YES) and the number of the selected print data is 1 (step S23; 1), the controller 300 shifts to step S26. Once the start key 401 is pressed (step S26; YES), the print controller 302b outputs the print data stored temporarily in the RAM, to the image forming unit 130, and causes the image forming unit 130 to print the print data. Consequently, the image forming unit 130 executes the printing using the print setting information retained in the print data (step S27).

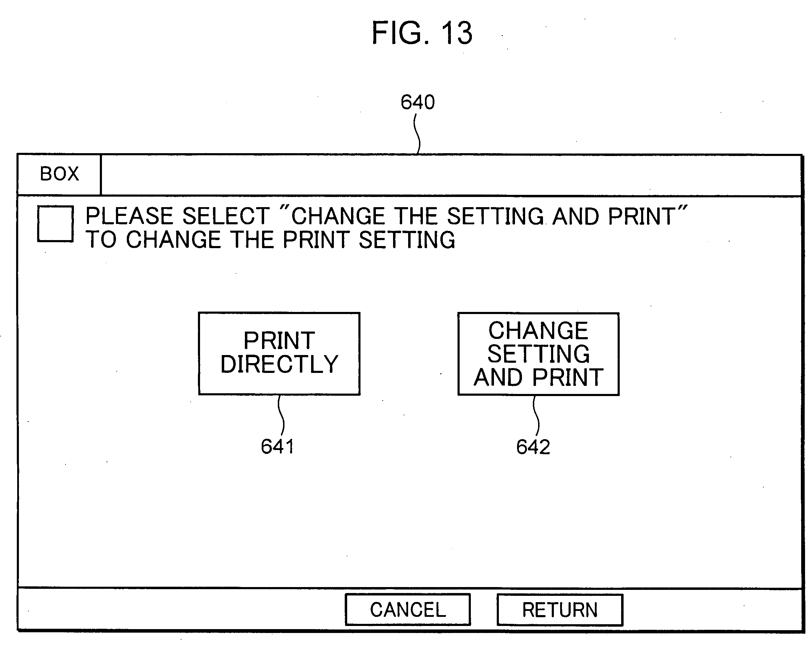

When the number of the selected print data is more than one (step S23; plural), the display controller 301b causes the display panel 406 to display a screen 640 shown in FIG. 13. In other words, the display controller 301b causes the display panel 406 to display a screen that allows the controller 300 (change selection accepting unit) to accept a selected input about whether the print setting information retained in the print data are used directly for printing the print data or whether all of the print setting information retained in each of the print data are changed or not. FIG. 13 shows the screen 640 that accepts the selected input about whether the print setting information retained in print data are used or not. A key 641 is a key that is selected when printing is executed by directly using the print setting information retained in the print data. A key 642 is a key that is selected when printing is executed after changing the contents of the print setting information retained in the print data. When the user selects the key 641 (step S24; NO) and the start key 401 is pressed (step S26; YES), the print controller 302b outputs the print data stored temporarily in the RAM, to the image forming unit 130, and causes the image forming unit 130 to execute printing of the print data. Consequently, the image forming unit 130 prints the print data by using the print setting information retained in the print data (step S27).

When the user selects the key 642 (step S24; YES), the print controller 302b discards all of the print setting information that are carried by the print data stored temporarily in the RAM. Therefore, the print setting information enter the default state (initial state) at this point. Then, the display controller 301b causes the display panel 406 to display the print setting screen 630 shown in FIG. 10. The controller 300 (print setting accepting unit) accepts the print setting via the print setting screen 630. The user uses this print setting screen 630 to select a sheet and perform a desired print setting, i.e., double-side printing or staple copying. Once the user performs the touch operation on the display panel 406, the display panel 406 with the touch panel function detects a touched position and outputs a resultant detection signal to the controller 300. In this case, based on this detection signal, the print controller 302b sets or changes the print setting information of the print data stored temporarily in the RAM (step S25).

Here, "changing the print setting information" means that the print controller 302b changes the print setting information of the print data stored temporarily in the RAM, to the print setting information set in step S25. As a result, the plurality of selected print data (i.e., the print data stored temporarily in the RAM) eventually retain the same print setting information.

Then, when the user presses the start key 401 (step S26; YES), the print controller 302b outputs the print data stored temporarily in the RAM, to the image forming unit 130, and causes the image forming unit 130 to execute printing of the print data. Consequently, the image forming unit 130 prints the print data by using the print setting information retained in the print data. In other words, all of the print data are printed in accordance with the common print setting (step S27).

When, on the other hand, the user selects the key 641 (step S24; NO), the print controller 302b does not change the print setting information of the print data stored temporarily in the RAM. Subsequently, when the start key 401 is pressed (step S26; YES), the print controller 302b outputs the print data stored temporarily in the RAM, to the image forming unit 130, and causes the image forming unit 130 to execute printing of the print data. Consequently, the image forming unit 130 prints the print data by using the print setting information retained in the print data. In other words, the printing of the print data is executed by directly using the print setting information retained in the print data (step S27).

As described above, when printing the plurality of print data in accordance with the common print setting, the plurality of print data retaining print setting information different from one another, all of the print setting information retained in the print data are invalidated, and the image forming unit 130 is caused to print the print data by using a new print setting. Therefore, the user does not have to rest each of the print setting information, enabling the execution of printing by a simple operation.

In addition, a complicated prohibition relationship is generated among the data when the common print setting is set by directly using the print setting information retained in the print data, which makes it difficult for the user to understand what kind of printed matter is obtained. However, as described above, the print controller 302b can invalidate all of the print setting information retained in the print data and execute the printing based on the new print setting information that are set via the print setting screen as the print setting information common to all print data. This can eliminate the prohibition relationship and provide clear printed results.

### (Second Related Example)

A second example related to the present disclosure but not covered by the scope of the claims is described with reference to the drawings. The second related example can provide an image forming apparatus that allows the user to easily see the contents of the print setting information retained in the print data. According to this image forming apparatus, it is possible to improve an operability in a print setting for selecting and printing the print data accumulated in the document boxes and retaining the print setting information.

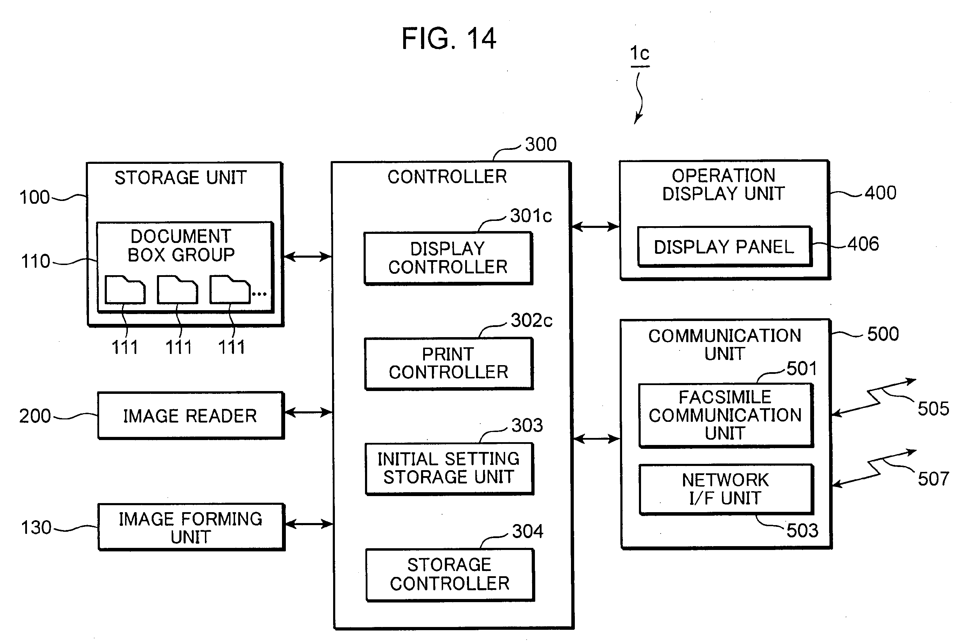

An internal structure of an image forming apparatus 1c according to the second related example is the same as the internal structure of the image forming apparatus 1a according to the embodiment shown in FIG. 1; therefore, the description of the internal structure of the image forming apparatus 1c is omitted. FIG. 14 is a block diagram showing an electrical configuration of the image forming apparatus 1c according to the second related example. The same reference numerals as those of the image forming apparatus 1a of the embodiment shown in FIG. 2 are applied to the components of the image forming apparatus 1c; therefore, the description thereof is omitted.

The controller 300 has a display controller 301c, a print controller 302c, an initial setting storage unit 303, and the storage controller 304. The display controller 301c controls the display panel 406 to display messages about various operations and contents of operations, as well as the operation keys. The print controller 302c controls the image forming unit 130 to print the print data saved in the box 111. The display controller 301c also causes the display panel 406 to display a screen that allows the controller 300 (print accepting unit) to accept a selected input of the print data stored in the storage unit 100.

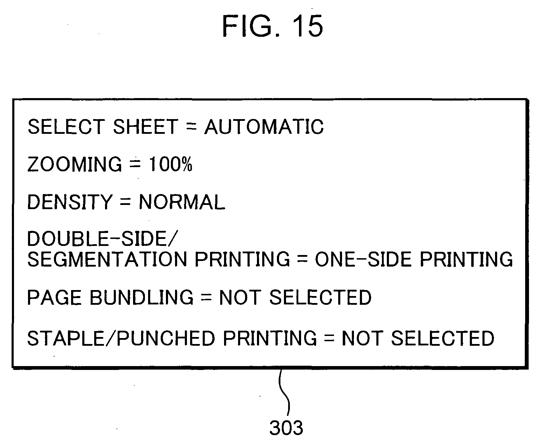

The initial setting storage unit 303 stores default values (initial values) of print settings set in the image forming apparatus 1c. FIG. 15 is a diagram for illustrating contents stored in the initial setting storage unit 303. For example, values that indicate sheet selection, zooming, density, double-side/segmentation printing, bundling pages, staple/punched printing, and other types of frequently used print settings, are stored as the default values in the initial setting storage unit 303. The default values stored in the initial setting storage unit 303 are previously stored prior to, for example, factory shipment.

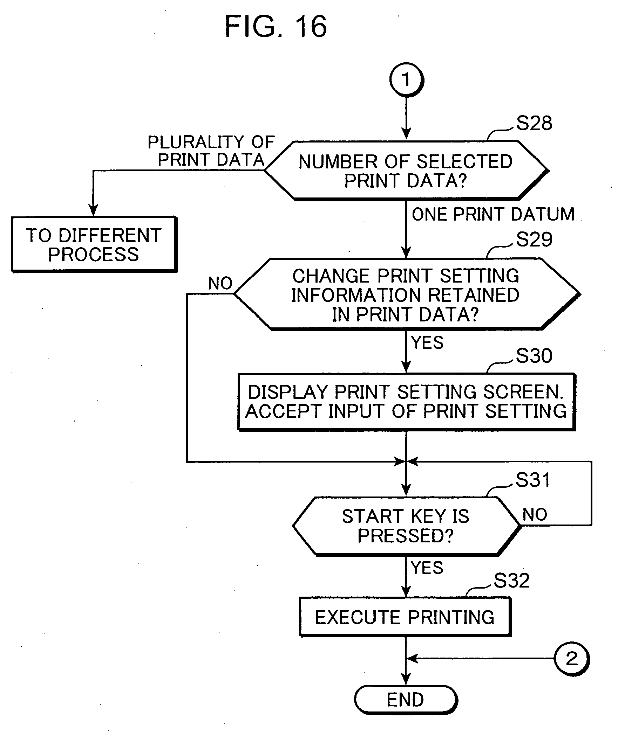

Next is described in detail a method for printing one print datum that retains the print setting information. FIG. 16 is a flowchart showing a flow of a printing process for printing a print datum saved in the box 111 according to the second related example. FIG. 16 shows a second half of the flowchart. A first half of the flowchart is same as the flowchart shown in FIG. 5; therefore, the description thereof is omitted.

When the print data are selected and the user selects the "print" key 612 (step S15 of FIG. 5; YES), the print controller 302c reads the selected print data from the box 111 and temporarily stores the selected print data in the RAM or the like of the controller 300. The controller 300 then determines the number of the selected print data (step S28). When the number of the selected print data is more than one (step S28; plural), the controller 300 performs a different process. In brief, the controller 300 temporarily stores the plurality of selected print data in the RAM, and prints the print data in accordance with the print setting information retained in each of the print data.

When, on the other hand, the number of the selected print data is 1 (step S28; 1), the display controller 301c causes the display panel 406 to display the screen 640 shown in FIG. 13. In other words, the display controller 301c causes the display panel 406 to display the screen that allows the controller 300 (setting change accepting unit) to accept a selected input about whether the print setting information are used directly or whether the printing is performed in accordance with changed print setting information. FIG. 13 shows the screen 640 that accepts the selected input about whether the print setting information retained in print data are used or not. The key 641 is a key that is selected when printing is executed by directly using the print setting information retained in the print data. The key 642 is a key that is selected when printing is executed after changing the contents of the print setting information retained in the print data.

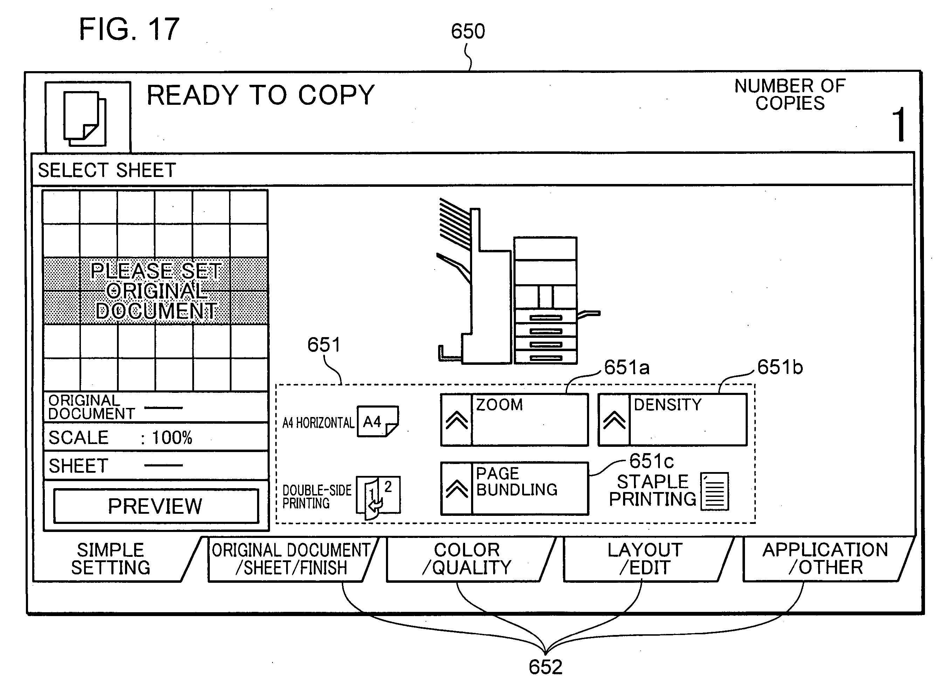

When the user selects the key 641 (step S29; NO), the print controller 302c does not change the print setting information of the print data stored temporarily in the RAM. Subsequently, when the start key 401 is pressed (step S31; YES), the print controller 302c outputs the print data stored temporarily in the RAM, to the image forming unit 130, and causes the image forming unit 130 to execute printing of the print data. Consequently, the image forming unit 130 prints the print data by using the print setting information retained in the print data. In other words, the printing of the print data is executed by directly using the print setting information retained in the print data (step S32). When, on the other hand, the user selects the key 642 (step S29; YES), the display controller 301c causes the display panel 406 to display a print setting screen 650 shown in FIG. 17. FIG. 17 shows the print setting screen 650 that is displayed when printing is executed in accordance with changed print setting information. The controller 300 (print setting accepting unit) accepts the print settings via the print setting screen 650.

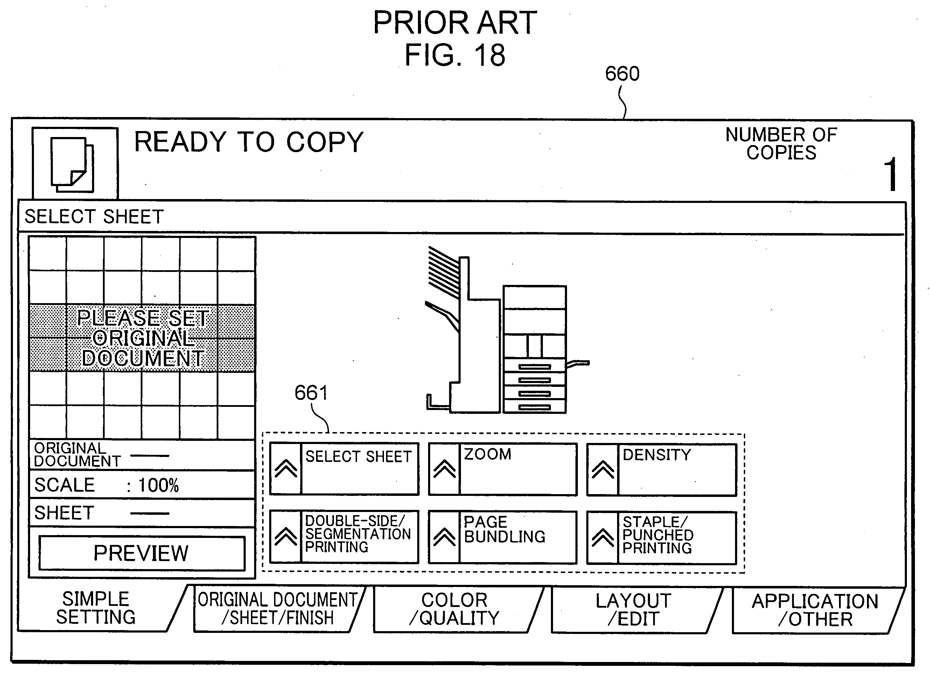

In the prior art, a print setting screen 660 shown in FIG. 18 is displayed when printing the print data in accordance with changed print setting information, which requires a predetermined key operation to see the contents of the print setting information retained in the print data. For instance, in order to see "sheet size" from the print setting information of the file aaa shown in FIG. 3, the user has to select a sheet selection icon from a setting icon 661 to finally see the setting contents on a sheet selection screen that is displayed subsequently. This means that the user cannot see the print setting information of the file aaa immediately.

Therefore, the controller 300 (determination unit) compares the print setting information retained in the file aaa with the default values stored in the initial setting storage unit 303, and determines whether the setting contents of both sides are different from each other or not. When the setting contents are different from each other, the display controller 301c reflects and displays the contents of the print setting information of the file aaa in icon sections corresponding to the different items, without displaying icons.

Because the file aaa retains the print setting information indicating "A4 horizontal, double-side printing, stapling printing," the display controller 301c displays the contents of the print setting information, such that the sheet selection icon shows "A4 horizontal," that a double-side/segmentation printing icon shows "double-side printing," and that a staple/punched printing icon shows "staple printing," in a setting icon 651 of the print setting screen 650. The display controller 301c also displays marks corresponding to these contents. Icons of the items, which indicate that the print setting information of the file aaa are the same as the default values, are displayed as a zooming icon 651a, a density icon 651b, and a page bundling icon 651c. Thus, as a result of comparing the contents of the print setting information of the print data with the default values, the contents of the print setting information of the print data are displayed, without displaying the icons for the different items. This allows the user to have an easy visual understanding of the contents of the print setting information retained in the print data. In other words, when the controller 300 (determination unit) determines that the print setting information retained in the print data are different from the print setting information stored in the initial setting storage unit 303, the display controller 301c displays print setting items for which the print setting information are different between the print data and the initial setting storage unit 303, distinctively from print setting items for which the print setting information are identical.

When the user selects, for example, the density icon 651b on the print setting screen 650, the display controller 301c displays a density setting screen (not shown). The user adjusts the density by using the density setting screen. When the user wishes to change the contents of the print setting information of the file aaa, the user selects a function tab 652 in accordance with the contents that the user wishes to change. When this function tab 652 is selected, the display controller 301c displays a setting screen corresponding to the type of a selected tab. For example, when the user wishes to select "A4 vertical" in place of "A4 horizontal," the user selects a "original document/sheet/finish" tab of the function tab 652. When this tab is selected, the display controller 301c displays the sheet selection screen (not shown). The user can change the sheet settings by using this sheet selection screen.

When the user performs the touch operation on the display panel 406, the display panel 406 with the touch panel function detects a touched position and outputs a resultant detection signal to the controller 300. In this case, based on the detection signal, the print controller 302c changes the print setting information of the print data stored temporarily in the RAM (step S30). Here, the expression "changing the print setting information" means that the print controller 302c changes the print setting information of the print data stored temporarily in the RAM, to the print setting information set in step S31.

When the user presses the start key 401 (step S31; YES), the print controller 302c outputs the print data stored temporarily in the RAM, to the image forming unit 130, and causes the image forming unit 130 to execute printing of the print data. Consequently, the image forming unit 130 prints the print data by using the print setting information retained in the print data. In other words, the print data are printed in accordance with the print setting that is changed in step S30 (step S32).

As described above, when printing the print data in accordance with the changed print setting information, the controller 300 compares the contents of the print setting information retained in the print data with the initial settings stored in the initial setting storage unit 303. Of the print setting information retained in the print data, the same items as initial settings are displayed in the form of icons. For the items different from the initial settings, the display controller 301c reflects and displays the contents of the print setting information, without displaying icons. This allows the user to have an easy visual understanding of the contents of the print setting information retained in the print data, and improves the convenience of changing the print setting information.

According to the second related example, when printing the print data in accordance with the changed print setting information, the display panel 406 displays the items different from the initial values of the print setting information (different from the default values), out of the contents of the print setting information retained in the print data. Therefore, the user can promptly see the contents of the print setting information retained in the print data, through the display panel 406 (screen), whereby the convenience of changing the print setting information can be improved.

The image forming apparatus 1c according to the second related example has the following aspects. When the controller 300 (determination unit) determines that the print setting information retained in the print data are different from the print setting information stored in the initial setting storage unit 303, the display controller 301c displays the print setting items about the print setting information being different between the print data and the initial setting storage unit 303, distinctively from the print setting items about the print setting information being identical.

This aspect allows the user to recognize, by looking, the print setting items in which the print setting information of the print data are identical to or different from the initial values of the print settings set in the apparatus main body 3 of the image forming apparatus 1c.

Although the present disclosure has been fully described by way of example with reference to the accompanying drawings, it is to be understood that various changes and modifications will be apparent to those skilled in the art. Therefore, unless otherwise such changes and modifications depart from the scope of the present disclosure hereinafter defined, they should be construed as being included therein.

## Claims

1. An image forming apparatus (1 a), comprising:
an image reader (200) that reads an original document to generate image data;
a storage unit (100) that accumulates and stores print data;
a storage control unit (304) that, (a) when print data having a print setting set by an information processor are transmitted to the image forming apparatus (1a), causes the storage unit (100) to store the print setting information about the print setting and the print data transmitted from the information processor, (b) when the image data is generated by the image reader (200), causes the storage unit (100) to store the generated image data, as the print data not retaining any print setting information;
a print accepting unit that accepts a selected input of the print data stored in the storage unit (100);
an image forming unit (130) that prints out an image onto a sheet;
a determination unit (300) that, when the print accepting unit accepts a selected input of a plurality of print data, determines whether the plurality of print data include both print data retaining print setting information and print data not retaining any print setting information;
a display control unit (301 a) that causes a display unit (400) to display a message about invalidation of the print setting information retained in the print data, when the determination unit (300) determines that the print data accepted by the print accepting unit (300) include both the print data retaining the print setting information and the print data not retaining any print setting information;
an agreement accepting unit (300) that accepts a selected input about whether to agree to the message about invalidation of the print setting information;
a print setting accepting unit (300) that accepts a setting input of same print setting for the plurality of print data when the agreement accepting unit accepts the selected input about agreement; and
a print control unit (302a) that when the agreement accepting unit (300) accepts the selected input about agreement, invalidates the print setting information retained in the print data accepted by the print accepting unit (300), and causes the image forming unit (103) to execute printing based on the plurality of print data by using the print setting accepted by the print setting accepting unit, wherein
the display control unit (301 a) causes the display unit (400) not to display the message when the determination unit (300) determines that the print data accepted by the print accepting unit (300) does not include both the print data retaining the print setting information and the print data not retaining any print setting information,
the print control unit (302a) stops the printing when the agreement accepting unit (300) accepts a selected input about disagreement.

2. The image forming apparatus (1 a) according to claim 1, further comprising:
the display unit (400),
wherein the display control unit (301 a) causes the display unit (400) to display a screen that allows the print accepting unit to accept the selected input of the print data stored in the storage unit.

3. The image forming apparatus according to claim 1 or claim 2, wherein when invalidating the print setting information retained in the print data accepted by the print accepting unit (300), the print control unit (302a) assigns an initial value of a print setting that is set in an apparatus main body of the image forming apparatus as a print setting for the print data retaining the print setting information and for the print data not retaining any print setting information, the print data being accepted by the print accepting unit (300).

## Patentansprüche

1. Eine Bilderzeugungsvorrichtung (1a), die Folgendes umfasst:
einen Bildleser (200), der ein Originaldokument liest, um Bilddaten zu erzeugen;
eine Speichereinheit (100) die Druckdaten akkumuliert und speichert;
eine Speichersteuereinheit (304), die, (a) wenn Druckdaten, bei denen eine Druckeinstellung von einem Informationsprozessor gesetzt wird, zur Bilderzeugungsvorrichtung (1a) übertragen werden, die Speichereinheit (100) dazu bringen, die Druckeinstellungsinformationen über die Druckeinstellung und die Druckdaten, die vom Informationsprozessor übertragen werden, zu speichern, (b) wenn die Bilddaten durch den Bildleser (200) erzeugt werden, die Speichereinheit (100) dazu bringen, die erzeugten Bilddaten zu speichern, wobei die Druckdaten keinerlei Druckeinstellungsinformationen beibehalten;
eine druckannehmende Einheit, die einen ausgewählten Input der in der Speichereinheit (100) gespeicherten Druckdaten annimmt;
eine Bilderzeugungseinheit (130), die ein Bild auf ein Blatt ausdruckt;
eine Bestimmungseinheit (300), die, wenn die druckannehmende Einheit einen ausgewählten Input aus der Vielzahl an Druckdaten annimmt, bestimmt, ob die Vielzahl an Druckdaten sowohl Druckdaten beinhaltet, die Druckeinstellungsinformationen beibehalten, als auch Druckdaten beinhaltet, die keinerlei Druckeinstellungsinformationen beibehalten;
eine Anzeigesteuerungseinheit (301 a), die eine Anzeigeeinheit (400) dazu bringt, eine Nachricht über die Entwertung (*invalidation*) der in den Druckdaten beibehaltenen Druckeinstellungsinformationen anzuzeigen, wenn die Bestimmungseinheit (300) bestimmt, dass die von der druckannehmenden Einheit (300) angenommenen Druckdaten sowohl Druckdaten einschließen, die Druckeinstellungsinformationen beibehalten, als auch Druckdaten einschließen, die keinerlei Druckeinstellungsinformationen beibehalten;
eine Zustimmung annehmende Einheit (300), die einen ausgewählten Input dazu annimmt, ob der Nachricht über die Entwertung der Druckeinstellungsinformationen zugestimmt wird;
eine Druckeinstellungen annehmende Einheit (300), die einen Einstell-Input gleicher Druckeinstellung für die Vielzahl an Druckdaten annimmt, wenn die Zustimmung annehmende Einheit den ausgewählten Input über die Zustimmung annimmt; und
eine Drucksteuerungseinheit (302a), die, wenn die Zustimmung annehmende Einheit (300) den ausgewählten Input über Zustimmung annimmt, die in den von der Druckeinstellungen annehmende Einheit (300) akzeptierten Druckdaten beibehaltenen Druckeinstellungsinformationen entwertet, die Bilderzeugungseinheit (103) dazu bringt, auf der Grundlage der Vielzahl an Druckdaten einen Druck auszuführen, indem die Druckeinstellung verwendet wird, die von der Druckeinstellungen annehmenden Einheit akzeptiert wird, wobei
die Anzeigesteuerungseinheit (301a) die Anzeigeeinheit (400) dazu bringt, die Nachricht nicht anzuzeigen, wenn die Bestimmungseinheit (300) bestimmt, dass die von der druckannehmende Einheit (300) akzeptierten Druckdaten weder die Druckdaten einschließen, die Druckeinstellungsinformationen beibehalten, noch die Druckdaten einschließen, die keinerlei Druckeinstellungsinformationen beibehalten,
die Drucksteuerungseinheit (302a) hält den Druck an, wenn die Zustimmung annehmende Einheit (300) einen ausgewählten Input über Nicht-Zustimmung annimmt.

2. Die Bilderzeugungsvorrichtung (1a) nach Anspruch 1, die des Weiteren Folgendes umfasst:
die Anzeigeeinheit (400),
wobei die Anzeigesteuerungseinheit (301a) die Anzeigeeinheit (400) dazu bringt, eine Darstellung anzuzeigen, die der druckannehmenden Einheit erlaubt den ausgewählten Input der in der Speichereinheit gespeicherten Druckdaten zu akzeptieren.

3. Die Bilderzeugungsvorrichtung nach Anspruch 1 oder Anspruch 2, wobei, bei der Entwertung der in den Druckdaten beibehaltenen Druckeinstellungsinformationen, die von der druckannehmenden Einheit (300) akzeptiert worden sind, die Drucksteuerungseinheit (302a) einen Anfangswert einer Druckeinstellung zuweist, der in einem Vorrichtungshauptkörper der Bilderzeugungsvorrichtung als Druckeinstellung für die Druckdaten gesetzt wird, die Druckeinstellungsinformationen beibehalten und für die Druckdaten, die keinerlei Druckeinstellungsinformationen beibehalten, wobei die Druckdaten von der druckannehmenden Einheit (300) angenommen werden.

## Revendications

1. Un appareil de formation d'image (1a), comprenant:
un lecteur d'image (200) qui lit un document original pour générer des données d'image ;
une unité de stockage (100) qui accumule et stocke des données d'impression ;
une unité de commande de stockage (304) qui, (a) quand des données d'impression, présentant un réglage d'impression modifié par un processeur d'information, sont transmises à l'appareil de formation d'image (1a), amène l'unité de stockage (100) à stocker l'information de réglage d'impression concernant le réglage d'impression et les données d'impression transmises à partir du processeur d'information, (b) quand les données d'image sont générées par le lecteur d'image (200), amène l'unité de stockage (100) à stocker les données d'images générées, sachant que les données d'impression ne retiennent aucune information de réglage d'impression ;
une unité d'acceptation d'impression qui accepte une entrée sélectionnée des données d'impression stockées dans l'unité de stockage (100) ;
une unité de formation d'image (130) qui imprime une image sur une feuille ;
une unité de détermination (300) qui détermine, quand l'unité d'acceptation d'impression accepte une entrée sélectionnée parmi une pluralité de données d'impression, si la pluralité de données d'impression contient à la fois des données d'impression retenant une information de réglage d'impression et des données d'impression ne retenant aucune information de réglage d'impression ;
une unité de commande d'affichage (301 a) qui amène une unité d'affichage (400) à afficher un message concernant une invalidation de l'information de réglage d'impression retenue dans les données d'impression, quand l'unité de détermination (300) détermine que les données d'impression acceptées par l'unité d'acceptation d'impression (300) inclut à la fois des données d'impression retenant l'information de réglage d'impression et des données d'impression ne retenant aucune information de réglage d'impression ;
une unité d'acceptation d'accord (300) qui accepte une entrée sélectionnée afin de convenir sur le message concernant l'invalidation de l'information de réglage d'impression ;
une unité d'acceptation de réglage d'impression (300) qui accepte une entrée de réglage du même réglage d'impression pour la pluralité de données d'impression quand l'unité d'acceptation d'accord accepte l'entrée sélectionnée concernant l'accord ; et
une unité de commande d'impression (302a) qui invalide, quand l'unité d'acceptation d'accord (300) accepte l'entrée sélectionnée concernant l'accord, l'information de réglage d'impression retenue dans les données d'impression acceptées par l'unité d'acceptation d'impression (300), et amène l'unité de formation d'image (130) à réaliser une impression basée sur la pluralité de données d'impression en utilisant le réglage d'impression accepté par l'unité d'acceptation d'impression, sachant que
l'unité de commande d'affichage (301a) amène l'unité d'affichage (400) à ne pas afficher le message quand l'unité de détermination (300) a déterminé que les données d'impression acceptées par l'unité d'acceptation d'impression (300) n'incluent pas à la fois les données d'impression retenant l'information de réglage d'impression et les données d'impression ne retenant aucune information de réglage d'impression,
l'unité de commande d'impression (302a) arrête l'impression quand l'unité d'acceptation d'accord (300) accepte une entrée sélectionnée concernant un désaccord.

2. L'appareil de formation d'image (1a) d'après la revendication 1, comprenant en outre :
l'unité d'affichage (400),
sachant que l'unité de commande d'affichage (301 a) amène l'unité d'affichage (400) à afficher un écran qui permet à l'unité d'acceptation d'impression d'accepter l'entrée sélectionnée des données d'impression stockées dans l'unité de stockage.

3. L'appareil de formation d'image d'après la revendication 1 ou la revendication 2, sachant que, lors de l'invalidation de l'information de réglage d'impression retenue dans les données d'impression acceptées par l'unité d'acceptation d'impression (300), l'unité de commande d'impression (302a) attribue une valeur initiale d'un réglage d'impression qui a été établi dans un corps principal d'appareil de l'appareil de formation d'image en tant que réglage d'impression pour les données d'impression retenant l'information de réglage d'impression et pour les données d'impression ne retenant aucune information de réglage d'impression, les données d'impression étant acceptées par l'unité d'acceptation d'impression (300).
